# EUROPEAN PATENT SPECIFICATION

(11) **EP 0 349 463 B1**
(45) Date of publication and mention of the grant of the patent: **02.03.1994**
(21) Application number: 89480095.2
(22) Date of filing: 07.06.1989
(51) Int. Cl.: G06F 3/033

(54) **Method of simultaneously entering data into overlapped windows**
Verfahren zur gleichzeitigen Dateneingabe in überlappende Fenster
Méthode pour introduire simultanément des données dans des fenêtres qui se chevauchent

(30) Priority: 30.06.1988 US 213422
(43) Date of publication of application: 03.01.1990
(73) Proprietor: International Business Machines Corporation, Armonk, N.Y. 10504 (US)
(72) Inventor: Barker, Barbara Ann, Round Rock Texas 76664 (US); Edel, Thomas R., Austin Texas 78750 (US); Stark, Jeffrey A., Grapevine Texas 76051 (US)
(74) Representative: Tubiana, Max

(56) References cited:
- US-A- 4 553 860
- US-A- 4 725 830
- AFIPS CONFERENCE PROCEEDINGS, 1985 NATIONAL COMPUTER CONFERENCE, Chigago, Illinois, 15th-18th July 1985, pages 451-460, AFIPS Press, Reston, Virginia, US; B.R. KONSYNSKI et al.: "A view on windows: Current approaches and neglected opportunities"

## Description

### Technical Field

This invention relates in general to efficient methods of utilizing multiple computer application programs in a multi-tasking computer system and in particular to methods for efficiently entering data into multiple computer applications. Still more particularly, the present invention relates to methods for simultaneously entering data into multiple computer applications by entering data into a common overlapping area of each of a plurality of windows in a multi-tasking computer system.

### Background Art

The manipulation, alteration, or deletion of data blocks within a computer stored document is well known in the prior art. For example, most word processing programs include processing commands which permit a user to alter, delete, copy, or move a designated segment or block within a stored document. This is generally accomplished by placing a cursor at the initial location of the desire data block and entering a selected keystroke indicative of data block selection. Next, the cursor is moved to the end of the selected data block and another keystroke is entered indicative of the end of a selected data block. In many known word processing systems the data block thus selected is visually indicated by "highlighting" or a reverse video display of the selected data block.

Generally the data block selected in the above referenced manner is then operated on in accordance with a process command which is or has been previously selected by the user. Additionally, certain systems permit the user to graphically move or "drag" the designated data block to a second location within the same document. In either event, should a user desire to process more than one non-contiguous data block in this manner, he or she must do so sequentially, by designating each data block individually, operating on that data block and then designating a second data block. There exists no provision in the prior art which permits a user to simply and easily designate a plurality of data blocks within a document or documents for subsequent processing. Recently, a method has been proposed whereby multiple data blocks may be processed by designating an initial location and final location for each of a plurality of such data blocks within a display document or documents and storing such data blocks for future processing. The stored data blocks are then processed utilizing selectable processing commands and the resultant new document may be displayed for the user.

These techniques represent a common manner in which data within one document may be copied and entered into a second document; however, the techniques proposed are time consuming and require a substantial number of keystrokes by the user in order to accomplish the end result. Neither of these techniques permits the input of data into multiple computer application programs simultaneously.

A special case wherein data may be simultaneously input into more than one location involves the utilization of so-called "relational" databases wherein a record is shared by more than one database. In such applications data entered into a particular record will be present in each database within the relational database which shares that record; however, this application is a special case and does not permit the efficient entry of common data into more than one unrelated computer application program.

Therefore, it should be apparent that a need exists for an efficient method whereby data may be entered into a plurality of unrelated computer application programs without the necessity of rekeying that data or copying that data into a second program by the utilization of a so-called "clipboard" memory.

### SUMMARY OF THE INVENTION

It is therefore one object of the present invention to provide an efficient method of utilizing multiple computer application programs in a multi-tasking computer system.

It is another object of the present invention to provide an efficient method of entering data into multiple computer application programs.

It is yet another object of the present invention to provide an improved method of entering data into multiple computer application programs by simultaneously entering data into multiple programs by entering it into a common overlapping area shared by a plurality of windows in a multi-tasking computer system.

The foregoing objects are achieved as is now described. The method of the present invention describes a method for simultaneously entering data into a plurality of active computer application programs which are displayed on a computer system in a plurality of windows. At least a portion of each of the plurality of windows are overlapped such that each window shares a common overlapping area. A display attribute associated with each window is utilized to determine whether or not that window will "share" the common overlapping area with other overlapping or overlapped windows. Thereafter, data input into the common overlapping area is shared by the computer application programs represented in those windows. In a preferred embodiment of the present invention, separation of two overlapped windows after data entry into a common overlapped area will result in the presence of that data in both windows without the necessity of rekeying or copying that data.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
FIGURE 1 is a pictorial representation of a plurality of overlapping windows in a multi-tasking computer system;
FIGURE 2 is a pictorial representation of a plurality of partially overlapped windows in a multi-tasking computer system having common data entered into a common overlapping area;
FIGURE 3 is a pictorial representation of the windows in a multi-tasking computer system of Figure 2, separated to show the presence of common data; and
FIGURE 4 is a logic flow diagram of the method of the present invention.

### DETAILED DESCRIPTION OF THE PREFERRED EMBODIMENT

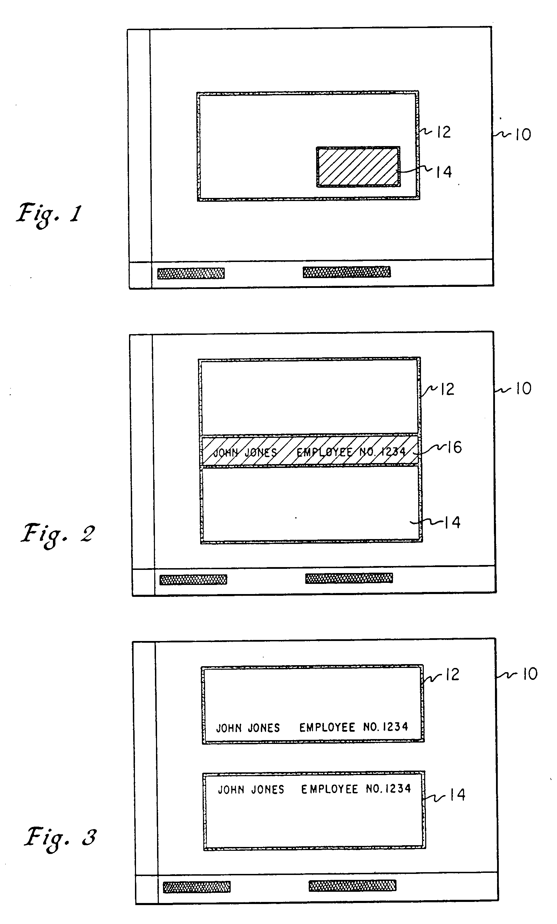

With reference now to the figures and in particular with reference to Figure 1, there is depicted a pictorial representation of a plurality of overlapping windows 12 and 14 which are displayed on a computer display 10 of a multi-tasking computer system. As can be seen, window 14 entirely overlaps window 12 and, in accordance with the method of the present invention, may share the common overlapping area contained within window 14 with the application of window 12. This is accomplished by the setting of a display attribute for windows 12 and 14 which will permit the common overlapping area of these two windows to be "shared" for purposes of data input.

Referring now to Figure 2, there is depicted a pictorial representation of a plurality of partially overlapping windows 12 and 14 which are displayed on computer display screen 10 of a multi-tasking computer system. As can be seen, area 16 represents the common overlapping area shared between windows 12 and 14. This is accomplished in accordance with the method of the present invention, by setting a display attribute for windows 12 and 14 to a "share" mode wherein the common overlapping area 16 between windows 12 and 14 will be considered to be a portion of both window 12 and window 14. As is illustrated, it is possible to enter data into common overlapping area 16, such as textual data 18 which is depicted within Figure 2.

With reference now to Figure 3, there is depicted a pictorial representation of the windows 12 and 14 of Figure 2 after separation of the windows has occurred. As can be seen, textual data 18, which was entered into common overlapping area 16 (see Figure 2), is now present in both window 12 and window 14 without the necessity of rekeying or copying that data. In this manner, it is possible for multiple computer application programs to receive simultaneously data which has been entered into a common overlapping area, once a display attribute has been set which permits each window to share the data entered into the common overlapping area.

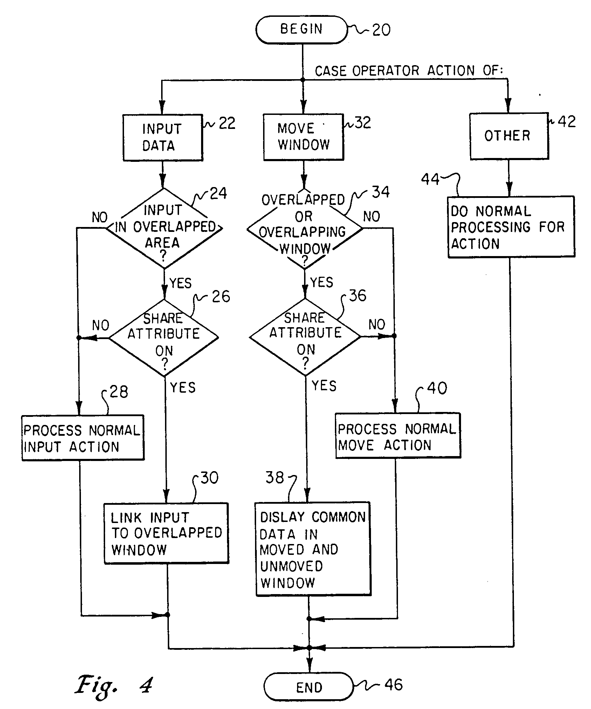

Referring now to Figure 4, there is depicted a logic flow diagram which illustrates the method of the present invention. As can be seen, after beginning as indicated at block 20, the user may select from one of three actions. That is, the user may elect to input data, as illustrated in block 22. The user may elect to move a window, as illustrated in block 32, or the user may select another action as illustrated in block 42.

In the event the user has selected an action other than the inputting of data or the moving of a window, block 44 indicates the normal processing of that action and the program then ends as indicated at block 46. Next, in the event the user has elected to input data, as illustrated in block 22, decision block 24 is utilized to determine whether or not the data being input is being input into an overlapped area of two or more windows in a multi-tasking computer system. If not, block 28 illustrates the processing of that input data in accordance with normal techniques and the program will again end as illustrated in block 46.

In the event the data being input into a window is located within an overlapped area as determined by block 24, block 26 is utilized to determine whether or not the "Share" attribute associated with that window is set. This attribute is a display attribute associated with each window in accordance with the method of the present invention and permits multiple windows within a multi-tasking computer system to share a common overlapped area in accordance with the description of the present invention. If the share attribute is not set, block 28 is once again utilized to depict the normal processing of the input action and the program will end at block 46. In the alternative, if the share attribute for the selected window is set, block 30 is utilized to depict the linking of the input data to the window which is overlapped in addition to the window in which the operator has entered the data. Thereafter, the program will end as depicted in block 46.

In accordance with another important aspect of the present invention, block 32 is utilized to indicate the user has elected as an action the moving of one of the plurality of windows generally associated with a multi-tasking computer system. Thereafter, block 34 is utilized to determine whether or not the window being moved includes an overlapped or overlapping area. If not, the move is processed in accordance with normal activities, as depicted in block 40 and the program will end as illustrated in block 46. However, if the window being moved includes an overlapped or overlapping area, as determined by block 34, then block 36 is utilized to determine whether or not the share attribute is set for the window in question. If not, the move is accomplished utilizing normal activity as illustrated in block 40, and the program again ends as illustrated in block 46. However, if the share attribute is set for the particular window in question, block 38 is utilized to illustrate the displaying of data which has been entered into the common overlapped area in both the moved and unmoved window which either overlapped or was overlapped by the moved window.

Those skilled in the art will appreciate that by utilizing a "Share" attribute associated with each of a plurality of windows in a multi-tasking computer system, it is possible to directly key data into a common overlapping area such that the data thus input will be shared by the programs represented in the windows which share the common overlapping area. In this manner, data may be input into multiple windows without the necessity of rekeying or moving the data utilizing a clipboard memory or other technique.

## Claims

1. A method of simultaneously inputting data into a plurality of computer application programs which are simultaneously active and displayed on a computer system in a plurality of windows, said method comprising the steps of:
overlapping at least a portion of each of said plurality of windows such that each of said plurality of windows shares a common overlapping area;
setting a display attribute associated with each window to determine whether that window will share the contents of said common overlapping area with other windows; and
inputting data into said common overlapping area.

2. The method according to Claim 1 further including the step of:
physically separating each of said plurality of windows and displaying said input data in each of said separate windows thereafter.

3. The method according to Claim 1 wherein said step of overlapping at least a portion of said plurality of windows such that each of said plurality of windows shares a common overlapping area is further characterized as overlapping the entire portion of at least one of said plurality of windows over a second of said plurality of windows.

4. The method according to Claim 1 wherein said step of setting a display attribute permitting sharing of the contents of said common overlapping area comprises setting a display attribute for each of said plurality of windows.

5. The method according to Claim 1 wherein said step of inputting data into said common overlapping area comprises the inputting of textual data.

## Patentansprüche

1. Eine Methode zur gleichzeitigen Dateneingabe in eine Mehrzahl von gleichzeitig aktiven Computeranwendungsprogrammen, die zur gleichen Zeit in einer Mehrzahl von Fenstern auf einem Computersystem angezeigt werden, wobei die Methode folgende Schritte aufweist:
ein Überlappen zumindest eines Teils jedes der Mehrzahl der Fenster, so daß alle dieser Mehrzahl von Fenstern sich einen gemeinsamen, überlappenden Bereich teilen.
die Aktivierung eines Anzeigeattributs, das jedem Fenster zugewiesen ist, um festzulegen, ob besagtes Fenster den Inhalt des gemeinsamen überlappenden Bereichs mit anderen Fenstern teilt, und
die Dateneingabe in den gemeinsamen überlappenden Bereich.

2. Die Methode gemäß Anspruch 1, die weiterhin den Schritt umfaßt,
jedes der Mehrzahl der Fenster räumlich voneinander zu trennen und danach die eingegebenen Daten in jedem der voneinander getrennten Fenster anzuzeigen.

3. Die Methode gemäß Anspruch 1, wobei der Schritt des Überlappens zumindest eines Teils jedes der Mehrzahl von Fenstern, wodurch alle dieser Mehrzahl von Fenstern einen gemeinsamen, überlappenden Bereich teilen, weitergehend charakterisiert wird durch das Überlappen des Gesamtbereichs zumindest eines der Mehrzahl von Fenstern über ein zweites der Mehrzahl von Fenstern.

4. Die Methode gemäß Anspruch 1, wobei der Schritt der Aktivierung eines Anzeigeattributs, welches das Teilen des Inhalts des gemeinsamen überlappenden Bereichs ermöglicht, die Aktivierung eines Anzeigeattributs für jedes der Mehrzahl von Fenstern umfaßt.

5. Die Methode gemäß Anspruch 1, wobei der Schritt der Dateneingabe in den gemeinsamen überlappenden Bereich die Eingabe von Textdaten umfaßt.

## Revendications

1. Procédé pour entrer simultanément des données dans une pluralité de programmes d'application sur ordinateur qui sont simultanément actifs et affichés sur un système informatique dans une pluralité de fenêtres, ledit procédé comprenant les étapes consistant à :
faire se chevaucher au moins une partie de chacune des fenêtres de ladite pluralité de fenêtres, en sorte que chacune des fenêtres de ladite pluralité de fenêtres partage une zone de chevauchement commune;
fixer un attribut vidéo associé à chaque fenêtre pour déterminer si cette fenêtre partagera, ou non, le contenu de ladite zone de chevauchement commune avec d'autres fenêtres; et
entrer des données dans ladite zone de chevauchement commune.

2. Procédé selon la revendication 1, comprenant, de plus, l'étape consistant à :
séparer physiquement chacune des fenêtres de ladite pluralité de fenêtres, et afficher ensuite les dites données d'entrée dans chacune des dites fenêtres séparées.

3. Procédé selon la revendication 1, dans lequel ladite étape qui consiste à faire se chevaucher au moins une partie de chacune des fenêtres de ladite pluralité de fenêtres, en sorte que chacune des fenêtres de ladite pluralité de fenêtres partage une zone de chevauchement commune est de plus caractérisée en ce qu'elle consiste à superposer la surface entière d'au moins une fenêtre de ladite pluralité de fenêtres sur une deuxième fenêtre de ladite pluralité de fenêtres.

4. Procédé selon la revendication 1, dans lequel ladite étape consistant à fixer un attribut vidéo permettant de partager le contenu de ladite zone de chevauchement commune comprend le positionnement d'un attribut vidéo pour chaque fenêtre de ladite pluralité de fenêtres.

5. Procédé selon la revendication 1, dans lequel ladite étape consistant à entrer des données dans ladite zone de chevauchement commune comprend l'entrée de données textuelles.
